# EUROPÄISCHE PATENTANMELDUNG

(11) **EP 2 497 356 A1**
(43) Veröffentlichungstag der Anmeldung: **12.09.2012**
(21) Anmeldenummer: 12001610.0
(22) Anmeldetag: 08.03.2012
(51) Int. Cl.: A01K 1/00

(54) **Boxenabtrennung**

(30) Priorität: 11.03.2011 DE 202011003865 U
(71) Anmelder: Teipen-Backsmann, Alfons, 49740 Haselünne (DE)
(72) Erfinder: Teipen-Backsmann, Alfons, 49740 Haselünne (DE)
(74) Vertreter: Weeg, Thomas

(57) **Zusammenfassung**

Die vorliegende Erfindung bezieht sich auf eine Boxenabtrennung (2) für Nutzvieh mit einem flexiblen, aus einem Kunststoffmaterial oder Verstärkungsfasern enthaltenden Kunststoffmaterial hergestellten Trennelement (4) und einem Nackenriegel (6).

Um ein Trennelement vorzuschlagen, das eine noch ausreichende Flexibilität aufweist, um Verletzungen und Schmerzen der Tiere beim Hinlegen und Aufstehen zu vermeiden, gleichwohl aber eine größere Steifigkeit aufweist, um ein Querlegen von Tieren über mehrere Boxen hinweg oder ein Hineindrängen von Tieren in benachbarte Boxen zu vermeiden, wird vorgeschlagen, dass das Trennelement (4) einen Oberzug (8) und einen Unterzug (10) aufweist, die über ein Verbindungselement (12) miteinander verbunden sind.

## Beschreibung

Die vorliegende Erfindung bezieht sich auf eine Boxenabtrennung für Nutzvieh mit einem flexiblen, aus einem Kunststoffmaterial oder einem Verstärkungsfasern enthaltenden Kunststoffmaterial hergestellten Trennelement und einem Nackenriegel.

Aus dem Stand der Technik sind Boxenabtrennungen aus Trennelementen aus einem Verstärkungsfasern enthaltenden Material, wie beispielsweise glasfaserverstärkten Kunststoffstäben, bekannt. Ein Beispiel hierfür findet sich in der Schrift DE 20 2009 000 200 U1. Das bekannte Trennelement besteht aus einem einzigen Rohr, das die Boxen einzelner Tiere voneinander trennt. Durch das flexible Rohr ist die Verletzungsgefahr der in den Boxen stehenden Tiere beim Hinlegen und Aufstehen verringert.

Es hat sich allerdings gezeigt, dass das flexible Rohr manche Tiere nicht davon abhält, sich quer über mehrere Boxen hinweg hinzulegen oder sich in Nachbarboxen hineinzudrängen. Das flexible Rohr bietet dazu einen zu geringen Widerstand.

Es ist die Aufgabe der vorliegenden Erfindung, ein Trennelement vorzuschlagen, das eine noch ausreichende Flexibilität aufweist, um Verletzungen und Schmerzen der Tiere beim Hinlegen und Aufstehen zu vermeiden, gleichwohl aber eine größere Steifigkeit aufweist, um ein Querlegen von Tieren über mehrere Boxen hinweg oder ein Hineindrängen von Tieren in benachbarte Boxen zu vermeiden.

Die Aufgabe wird für eine gattungsgemäße Boxenabtrennung gelöst, indem das Trennelement einen Oberzug und einen Unterzug aufweist, die über ein Verbindungselement miteinander verbunden sind.

Das Trennelement ist also erfindungsgemäß dreiteilig aufgebaut. Zumindest der Oberzug und der Unterzug bestehen aus einem flexiblen, biegeelastischen Verstärkungsfasern enthaltenden Kunststoffmaterial und weisen deshalb die Flexibilität auf, die erforderlich ist, damit das Trennelement bei einem Anstoß eines Tieres ausweichen kann. Es können beispielsweise Fiberglasstäbe mit einem Durchmesser von 20 - 40 mm für den Oberzug und den Unterzug verwendet werden. Der Oberzug und der Unterzug können aus einfachem geradem Stangen- oder Rohrmaterial gebildet sein, das kostengünstig herzustellen und zu beziehen ist. Für die geraden Stangen müssen keine besonderen Formwerkzeuge vorgehalten werden, es kann kostengünstige Stangenware verarbeitet werden. Das Verbindungselement kann ebenfalls aus einem flexiblen Material bestehen, da es jedoch nur den Ober- und den Unterzug miteinander verbindet, ist es nicht so hohen Belastungen ausgesetzt und muss nicht zwingend faserverstärkt sein. Das Verbindungselement kann also auch aus einem einfachen Kunststoffmaterial in Stangen-, Rohr- oder Schlauchform gebildet sein. Das Verbindungselement kann an seinem einen oder beiden Enden mit dem Oberzug und/oder dem Unterzug gelenkig verbunden sein.

Durch die Verbindung des Oberzuges mit dem Unterzug über das Verbindungselement wird verhindert, dass sich ein Tier mit einem Halsband an den freien Enden des Oberzuges oder des Unterzuges einhaken kann. Die hinteren Spitzen des Oberzuges und des Unterzuges ragen nicht mehr frei in den Stallraum hinein, sondern bilden über das Verbindungselement einen größeren, voluminösen Raumkörper, der sich nicht mehr so leicht in einem Tierhalsband verfangen kann.

Durch das aus einem Oberzug und einem Unterzug bestehende Trennelement können größere Widerstände gegen ein Tier aufgebaut werden, dass sich quer zu den Boxen hinlegen oder sich in eine benachbarte Box hineindrängen will. Auch optisch ergibt sich eine besser vom Tier wahrnehmbare Barriere, weil insbesondere der Oberzug in einer größeren Höhe angeordnet ist als der Unterzug und deshalb vom Tier besser gesehen wird. Druck, den ein Tier gegen einen Oberzug oder einen Unterzug aufbaut, wird über das Verbindungselement zumindest teilweise auf das andere Bauteil übertragen. Um den Oberzug oder den Unterzug beiseite biegen zu können, muss das Tier eine erheblich größere Kraft aufbieten als das bei nur einem Zug erforderlich wäre. Der Oberzug und der Unterzug gemeinsam können so große Rückstellkräfte aufbauen, dass es auf Dauer für ein Tier zu unangenehm und zu anstrengend ist, den Druck aufrecht zu erhalten, so dass das Tier schließlich in seiner Box verbleibt.

Wenn in dieser Anmeldung von vorne oder hinten die Rede ist, so ist mit "vorne" der Bereich einer Box gemeint, in dem das Tier mit seinem Kopf steht, und mit "hinten" der Bereich, in dem das Tier mit seinem Hinterteil steht.

Nach einer Ausgestaltung der Erfindung ist das Verbindungselement in Längsrichtung verstellbar mit dem Oberzug und/oder Unterzug verbunden. Durch die in Längsrichtung verstellbare Verbindung können der Oberzug und der Unterzug in eine wahlweise einstellbare Relativlage zueinander gebracht werden, beispielsweise teleskopartig. Die Relativlage kann fest eingestellt werden, beispielsweise durch Klemmschrauben, oder es wird auf eine Festlegung der Bauteile zueinander verzichtet, die Bauteile können sich dann belastungsanhängig relativ zueinander bewegen, insbesondere in einem Bereich zwischen einem oder zwei Endanschlägen. Durch die Verstellbarkeit ist die Anpassung des Trennelements auf eine gewünschte Länge sowie auf eine gewünschte Höhe möglich.

Nach einer Ausgestaltung der Erfindung ist das Verbindungselement ein rohr- oder schlauchförmiger Hohlkörper aus einem Kunststoffmaterial oder einem faserverstärkten Kunststoffmaterial. Das Kunststoffmaterial weist eine materialtypische Eigenflexibilität mit einem geringen Stoß- und Verletzungsrisiko auf, es leitet Wärme schlecht ab und fühlt sich deshalb warm an, es ist pflegeleicht und korrosionsbeständig, und es ist kostengünstig verfügbar. Aufgrund dieser Eigenschaften ist es für die Verwendung in einer Tierbox ideal. Durch eine Rohrform ist es leicht auf den Oberzug und/oder den Unterzug aufsteckbar und verbindbar. In Schlauchform verfügt es über eine erhöhte Flexibilität, es kann aber trotzdem noch Kräfte zwischen dem Oberzug und dem Unterzug übertragen.

Nach einer Ausgestaltung der Erfindung weist der Oberzug einen von vorne nach hinten absinkenden und der Unterzug einen von vorne nach hinten ansteigenden Verlauf auf. Durch diese Anordnung laufen die Züge von vorne nach hinten aufeinander zu. Der Abstand, der zwischen dem Oberzug und dem Unterzug durch das Verbindungselement überbrückt werden muss, ist am hinteren Ende dadurch entsprechend geringer. Dort, wo ein Tier am wahrscheinlichsten anfängt, das Trennelement beiseite schieben zu wollen, nämlich im hinteren Bereich der Box, liegen der Oberzug und der Unterzug nahe beieinander und können so vom Tier nur sehr schwer einzeln beiseite gedrückt werden. Durch die räumliche Nähe des Oberzuges und des Unterzuges in diesem Bereich drückt ein Tier häufig zwangsläufig gegen beide Züge, ohne dass sämtliche auf einen Zug einwirkenden Kräfte allein über das Verbindungselement auf den anderen Zug übertragen werden müssen. Das Verbindungselement wird dadurch entlastet. Durch den größeren Abstand des Oberzuges vom Unterzug im vorderen Bereich wird ein in der Box stehendes Tier daran gehindert, das Trennelement einfach zu überklettern. Der Oberzug kann etwa in Kopf- und Augenhöhe des Tieres angeordnet werden, wodurch sich eine besser sichtbare Barrierewirkung ergibt.

Nach einer Ausgestaltung der Erfindung sind der Oberzug und der Unterzug nur mit ihren jeweiligen vorderen Enden an einem gemeinsamen Standrohr befestigt und die hinteren Enden ragen ohne zusätzliche Befestigung in den freien Raum. Durch die starre Befestigung der vorderen Enden des Oberzugs und des Unterzugs an einem Standrohr verfügen die Züge in diesem Bereich über eine nur geringe Flexibilität, da sie nicht zur Seite ausweichen können. Da die Tiere in diesem Bereich nicht mit ihrem vollen Gewicht gegen das Trennelement stoßen, ist die Gefahr von schmerzhaften Verletzungen in diesem Bereich aber auch geringer. Im hinteren Bereich, wo die Tiere mit ihrem vollen Körpergewicht beim Hinlegen und Aufstehen gegen die Trennelemente stoßen, ist das Verletzungs- und Schmerzrisiko erheblich höher, in diesem Bereich verfügt das erfindungsgemäße Trennelement aber auch bei der hier vorgeschlagenen Gestaltung über die volle Flexibilität, um bei Anstößen ausweichen zu können. Die Ausweichbewegung des Trennelements wird nicht durch eine starre Befestigung blockiert. Das Fehlen eines weiteren Standrohrs im hinteren Bereich der Box ermöglicht dem Tier zudem eine größere Bewegungsfreiheit.

Nach einer Ausgestaltung der Erfindung weisen der Oberzug, der Unterzug und/oder das Standrohr eine Beschichtung aus einem Kunststoff, insbesondere Polyethylen, auf. Die Beschichtung schützt das Material des Trennelements und verbessert die Langzeithaltbarkeit.

Nach einer Ausgestaltung der Erfindung sind der Oberzug und/oder der Unterzug drehfest, jedoch höhenverstellbar mit dem Standrohr verbunden. Durch die drehfeste Verbindung kann das Trennelement in seitlicher Richtung hohe Rückstellkräfte aufbauen, da sich das Trennelement bei einer Belastung in seitlicher Richtung nicht einfach wegdrehen kann. Durch die Höhenverstellbarkeit kann das Trennelement aber gut an unterschiedliche Tiergrößen angepasst werden.

Nach einer Ausgestaltung der Erfindung ist am Standrohr ein Halteelement zur Befestigung eines Nackenriegels drehfest, jedoch höhenverstellbar angeordnet. Durch die Befestigung eines Nackenriegels - einer Querstange, die sich in einer mittleren Höhe quer über eine oder mehrere Boxen erstreckt - am Standrohr wird das gesamte Trennsystem zusätzlich stabilisiert. Biegekräfte, die auf ein Trennelement und damit auch auf ein Standrohr einwirken, werden über die drehfeste Verbindung des Standrohres mit dem Nackenriegel auch in diesen übertragen. Da sich der Nackenriegel in Querrichtung über eine oder mehrere Boxen erstreckt, ist der Nackenriegel besonders dazu geeignet, Gegenkräfte zu seitlich wirkenden Biegekräften aufzubauen. Wenn sich der Nackenriegen über mehrere Boxen hinweg erstreckt, können die Biegekräfte zudem noch in benachbarte Standrohre übertragen werden.

Nach einer Ausgestaltung der Erfindung ist der Nackenriegel mit zumindest zwei voneinander beabstandet angeordneten Standrohren über ein jeweiliges Halteelement verbunden. Dies ergibt eine besonders stabilisierende Wirkung des Nackenriegels auf eine gesamte Boxenkonstruktion.

Nach einer Ausgestaltung der Erfindung ist das Halteelement mit dem Nackenriegel über einen aus einem Verstärkungsfasern enthaltenden Kunststoffmaterial hergestellten Verbindungsträger verbunden. Durch das entsprechend ausgestaltete Halteelement erlaubt auch die Anbindung des Nackenriegels eine gewisse Flexibilität der Konstruktion bei einem Anstoß eines Tieres an den Nackenriegel oder ein Trennelement, wodurch die Verletzungs- und Schmerzgefahr verringert wird.

Nach einer Ausgestaltung der Erfindung ist der Innenraum des Standrohrs mit einer Füllung versehen, die form- und/oder kraftschlüssig mit einem Bodendübel verbindbar ist. Das Standrohr kann aus Stahl, PE oder einem faserverstärkten Kunststoff hergestellt sein. Der Hohlraum des Rohres ist mit einer Füllung versehen, wie beispielsweise einem Holzkern, einer Kunststofffüllung oder einem anderen Material. In dieses Material kann eine Ausnehmung eingeformt werden, die formschlüssig ist zu einem Bodendübel. Der Bodendübel wird in eine Bohrung in den Betonboden eingesetzt, und das Standrohr kann dann zur Montage einfach auf den Bodendübel aufgesetzt werden. Auf diese Weise ist das Standrohr schnell und einfach mit dem Stallboden verbindbar. Über die formschlüssige Verbindung des Bodendübels mit der Füllung können die auf das Standrohr einwirkenden Kräfte gut in den Boden eingeleitet werden. Die formschlüssige Verbindung kann durch kraftschlüssige Verbindungselemente unterstützt werden, wie beispielsweise einen Kleber oder zusätzliche Schrauben, oder das Standrohr wird mit dem Bodendübel ausschließlich über kraftschlüssige Verbindungselemente verbunden.

Es wird ausdrücklich darauf hingewiesen, dass die vorstehend erläuterten Ausgestaltungen der Erfindung jeweils für sich mit dem Gegenstand des Hauptanspruchs kombinierbar sind, soweit sich aus dem Beschreibungstext nichts Gegenteiliges ergibt.

Weitere Abwandlungen und vorteilhafte Ausgestaltungen ergeben sich aus der nachfolgenden gegenständlichen Beschreibung und der Zeichnung. Die Erfindung wird nun anhand eines Ausführungsbeispiels näher beschrieben.

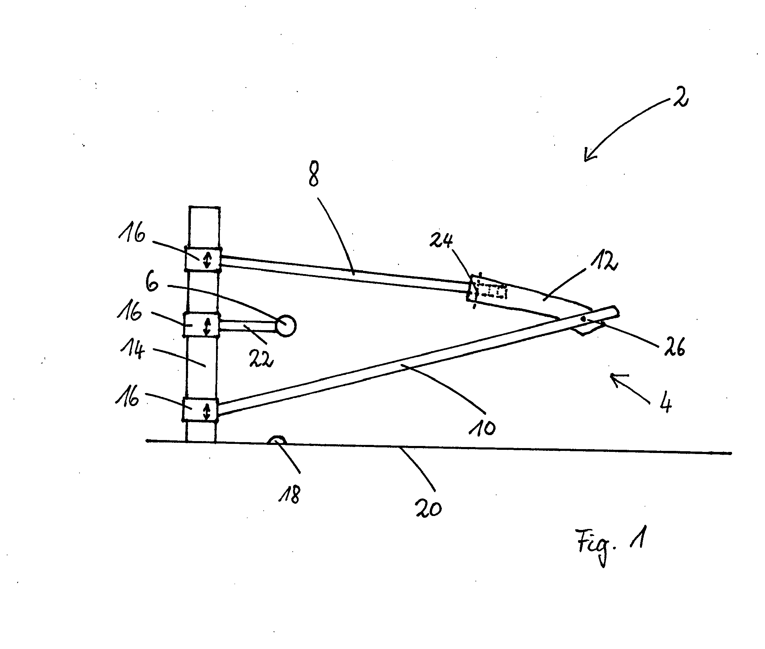

Die Fig. 1 zeigt eine Prinzipskizze einer erfindungsgemäßen Boxenabtrennung 2. Eine Box, in der eines oder mehrere Tiere eingestellt werden können, wird seitlich durch das Trennelement 4 abgegrenzt. Eine Box kann zu beiden Seiten durch jeweils ein Trennelement 4 von einer benachbarten Box abgetrennt werden. Das Trennelement 4 teilt eine Box von einer benachbarten Box ab. Ein Tier kann insbesondere parallel zum Trennelement 4 stehend in die Box eingestellt werden. Im vorderen Bereich der Box befindet sich ein Nackenriegel 6, durch den ein in der Box stehendes Tier dazu gezwungen werden soll, sich nicht zu weit nach vorn in die Box zu stellen.

Das Trennelement 4 ist zusammengesetzt aus einem Oberzug 8 und einem Unterzug 10, die durch ein Verbindungselement 12 miteinander verbunden sind. Der Oberzug 8 und der Unterzug bestehen aus einem geraden stangenförmigen biegeelastischen Material, das von einem in der Box stehenden Tier zur Seite gedrückt werden kann, ohne dass der Oberzug 8 und der Unterzug 10 dadurch bleibend verformt sind. Entfällt die Krafteinwirkung auf das Trennelement 4, durch die das Trennelement 4 zur Seite gebogen wird, schwingt das Trennelement 4 wieder in seine Ausgangslage zurück.

Der Oberzug 8 und der Unterzug 10 verlaufen beide nicht waagerecht, sondern schräg angestellt. Dadurch verringert sich der Abstand zwischen dem Oberzug 8 und dem Unterzug 10 über die Länge der Box von vorn nach hinten.

Der Oberzug 8 und der Unterzzug 10 sind durch das Verbindungselement 12 miteinander verbunden. Bei dem Verbindungselement 12 kann es sich beispielsweise um ein PE-Rohr handeln, das ebenfalls verformbar ist, ohne dabei einen dauerhaften Schaden zu erleiden, das aber auch vom Material her so zäh ist, dass es Kräfte vom Unterzug zum Oberzug und in entgegengesetzter Richtung übertragen kann. Durch das verformbare Material des Verbindungselements 12 können die stangenförmig gestalteten Ober- und Unterzüge 8, 10 durch ein kostengünstig verfügbares Bauteil miteinander verbunden werden. Durch seine Verformbarkeit passt sich die Form des Verbindungselements 12 den geometrischen Einbauverhältnissen leicht an, ohne dafür eine bestimmte Form aufweisen zu müssen.

Der Oberzug 8 und der Unterzug 10 sind beide an einem Standrohr 14 befestigt. Im Ausführungsbeispiel erfolgt die Befestigung über ein Halteelement 16, das höhenverstellbar mit dem Standrohr 14 verbunden ist, wie es durch die Doppelpfeile angedeutet ist. Die Halteelemente 16 können beispielsweise als Schellen oder Rohrabschnitte ausgebildet sein, die drehfest mit dem Standrohr 14 verbunden sein können, beispielsweise durch einen zeichnerisch nicht näher dargestellten nach innen ragenden Vorsprung, der in eine sich in Längsrichtung an dem Standrohr 14 befindliche Nut hineinragt. So ist das Halteelement 16 und die daran befestigten Ober- und Unterzüge 8, 10 gegen eine seitliche Verdrehbewegung gesichert. Dadurch können die Ober- und Unterzüge 8, 10 bei einem seitlich einwirkenden Druck Rückstellkräfte aufbauen, durch die das Trennelement 4 nach Wegfall des seitlich einwirkenden Drucks wieder in seine Ruhelage zurückschwingt. Da die hinteren Enden der Ober- und Unterzüge 8, 10 frei schwebend in den Stallraum ragen, können sich diese frei schwingend bewegen. Die vorderen Enden der Ober- und Unterzüge 8, 10 sind hingegen lagefixiert.

Auch der Nackenriegel 6 ist im Ausführungsbeispiel über zumindest ein Halteelement 16 mit dem Standrohr 14 verbunden, wobei auch dieses drehfest, aber höhenverstellbar mit dem Standrohr 14 verbunden sein kann. Da sich der Nackenriegel 6 über die volle Breite einer Box erstrecken kann, ist es möglich, den Nackenriegel 6 auch an den beiden in den vorderen Ecken einer Box befindlichen Standrohren 14 zu befestigen, wodurch sich eine feste und sichere Aufhängung ergibt.

Auf dem Stallboden befindet sich eine gesonderte Bugbegrenzung 18 auf dem Stallboden 20, durch die zusammen mit dem Nackenriegel 6 ein zu starkes Vordrängen eines in der Box befindlichen Tieres nach vorne hin vermieden werden soll. Um das Verletzungs- und Schmerzrisiko für ein in der Box befindliches Tier weiter zu vermindern, wenn dieses beim Hinlegen oder Aufstehen gegen den Nackenriegel 6 stößt, ist es vorteilhaft, wenn der Nackenriegel 6 mit den Halteelementen 16 über einen biegeelastischen Verbindungsträger 22 verbunden ist. Der biegeelastische Verbindungsträger 22 erlaubt in einem gewissen Umfang Ausweichbewegungen des Nackenriegels 6.

Durch eine rohr- oder schlauchartige Ausbildung des Verbindungselements 12 kann dieses bei einem ausreichenden Innendurchmesser des Hohlraums auf den Ober- und/oder Unterzug 8, 10 aufgeschoben und durch einen Fixierstift 24, Anschläge oder Klemmschrauben in einer Einbaulage fixiert sein. Wenn für den Fixierstift 24, die Anschläge oder die Klemmschrauben unterschiedliche Fixierpositionen vorgesehen sind, wie sie durch die gestrichelten Linien im Endbereich des Oberzuges 8 angedeutet sind, kann das Verbindungselement 12 auch dazu benutzt werden, unterschiedliche Längen und/oder Höhen des Trennelements 4 einzustellen. So kann das Verbindungselement 12 beispielsweise auch unter Spannung mit den Ober- und Unterzügen 8, 10 verbunden sein, wodurch diese auch in der Ruhelage einen leicht bogenförmigen Verlauf einnehmen. Die Verbindung des Verbindungselements 12 mit dem Ober- und/oder Unterzug 8, 10 kann aber auch durch einfache Steckbolzen 26 erfolgen, die eine gelenkige Verbindung der Ober- und Unterzüge 8, 10 miteinander erlauben.

Die vorstehend beschriebene Erfindung ist nicht auf das Ausführungsbeispiel beschränkt. Dem Fachmann bereitet es keine Schwierigkeiten, das vorstehend erläuterte Ausführungsbeispiel auf eine ihm als geeignet erscheinende Art und Weise an einen konkreten Anwendungsfall anzupassen und die im Ausführungsbeispiel gezeigten Bauteile entsprechend zu verändern und in ihrer Anordnung zueinander zu variieren.

## Patentansprüche

1. Boxenabtrennung (2) für Nutzvieh mit einem flexiblen, aus einem Kunststoffmaterial oder Verstärkungsfasern enthaltenden Kunststoffmaterial hergestellten Trennelement (4) und einem Nackenriegel (6), **dadurch gekennzeichnet, dass** das Trennelement (4) einen Oberzug (8) und einen Unterzug (10) aufweist, die über ein Verbindungselement (12) miteinander verbunden sind.

2. Boxenabtrennung (2) nach Anspruch 1, **dadurch gekennzeichnet, dass** das Verbindungselement (12) in Längsrichtung verstellbar mit dem Oberzug (8) und/oder Unterzug (10) verbunden ist.

3. Boxenabtrennung (2) nach Anspruch 1 oder 2, **dadurch gekennzeichnet, dass** das Verbindungselement (12) ein rohr- oder schlauchförmiger Hohlkörper aus einem Kunststoffmaterial oder einem faserverstärkten Kunststoffmaterial ist.

4. Boxenabtrennung (2) nach einem der vorhergehenden Ansprüche, **dadurch gekennzeichnet, dass** der Oberzug (8) einen von vorne nach hinten absinkenden und der Unterzug (10) einen von vorne nach hinten ansteigenden Verlauf aufweist.

5. Boxenabtrennung (2) nach einem der vorhergehenden Ansprüche, **dadurch gekennzeichnet, dass** der Oberzug (8) und der Unterzug (10) nur mit ihren jeweiligen vorderen Enden an einem gemeinsamen Standrohr (14) befestigt sind und die hinteren Enden ohne zusätzliche Befestigung in den freien Raum ragen.

6. Boxenabtrennung (2) nach einem der vorhergehenden Ansprüche, **dadurch gekennzeichnet, dass** der Oberzug (8), der Unterzug (10) und/oder das Standrohr (14) eine Beschichtung aus einem Kunststoff, insbesondere Polyethylen, aufweisen.

7. Boxenabtrennung (2) nach einem der vorhergehenden Ansprüche, **dadurch gekennzeichnet, dass** der Oberzug (8) und/oder der Unterzug (10) drehfest, jedoch höhenverstellbar mit dem Standrohr (14) verbunden sind.

8. Boxenabtrennung (2) nach einem der vorhergehenden Ansprüche, **dadurch gekennzeichnet, dass** am Standrohr (14) ein Halteelement (16) zur Befestigung eines Nackenriegels (6) drehfest, jedoch höhenverstellbar angeordnet ist.

9. Boxenabtrennung (2) nach Anspruch 8, **dadurch gekennzeichnet, dass** der Nackenriegel (6) mit zumindest zwei voneinander beabstandet angeordneten Standrohren (14) über ein jeweiliges Halteelement (16) verbunden ist.

10. Boxenabtrennung (2) nach einem der vorhergehenden Ansprüche 8 oder 9, **dadurch gekennzeichnet, dass** das Halteelement (16) mit dem Nackenriegel (6) über einen aus einem Verstärkungsfasern enthaltenden Kunststoffmaterial hergestellten Verbindungsträger (22) verbunden ist.

11. Boxenabtrennung (2) nach einem der vorhergehenden Ansprüche, **dadurch gekennzeichnet, dass** der Innenraum des Standrohrs (14) mit einer Füllung versehen ist, die form- und/oder kraftschlüssig mit einem Bodendübel verbindbar ist.
